# EUROPEAN PATENT APPLICATION

(11) **EP 2 354 788 A1**
(43) Date of publication of application: **10.08.2011**
(21) Application number: 10152548.3
(22) Date of filing: 03.02.2010
(51) Int. Cl.: G01N 33/18

(54) **Method and arrangement for monitoring water quality**

(71) Applicant: Predect AB, 12322 Farsta (SE)
(72) Inventor: Chowdhury, Sudhir, 12352 Farsta (SE)
(74) Representative: Allee, Harriet Eva Charlotta

(57) **Abstract**

A water supply and monitoring system comprising a first water pipe (301); a particle sensor for sensing particles in the water at a first location in said pipe; a second pipe (102), in fluid communication with the first pipe (301) by means of a first valve (302) disposed at a second location on the first pipe (301) downstream of the first location; a third pipe (306), in fluid communication with the first pipe (301) at a location between the first and second locations; a second valve (304), allowing water conveyed by the first pipe to flow into the third pipe (306). A method using said arrangement, comprising determining a content of particles in the water in the first pipe; triggering closure of the first valve (302) and opening of the second valve (304) when the determined content of particles is higher than a predetermined level, whereby water flowing in the first pipe (301) is diverted from second pipe (102) into third pipe (306).

## Description

### FIELD OF THE INVENTION

The present invention relates to a method and arrangement for monitoring water quality in a water supply system. In particular, the invention relates to a method and arrangement that allows for monitoring water quality in a water supply system while providing an improved safety of the water supply system against pollution and contamination of the water supplied by the system.

### BACKGROUND OF INVENTION

Currently available water quality monitoring systems generally are quite ineffective since they often measure the water quality at predetermined time intervals such as several times a day, once a week or once in a month. This means the actual testing may occur long after pollutants and other undesirable particles are already in the water flow on their way to the consumers. One problem with such systems is that the timing of the testing is not directly correlated to the actual event of the occurrence of the undesirable particles in the water flow. Another problem is that various micro-organisms and bacteria are of about the same size as other, harmless microscopic particles in the water, which makes it difficult to filter out such microorganisms and bacteria.

WO/2007/100390 discloses a method for monitoring the water quality and automatically collecting a sample for further analysis when water quality/cleanness deteriorates. However, in some cases, a water supply system may be subject to rapidly increasing amounts of polluting particles in the in-flowing water, for example due to sudden heavy rain, storm, unexpected dumping, chemicals, fertilizers, bacteria, parasites, viruses, oil spills, algae blooming, dumping of ballast water and other such unexpected sudden events that dramatically increases the pollution of the in-flowing water. This may lead to serious contamination of the entire supply system.

Consequently, there still remains a need for an improved method of monitoring the water quality in a water supply system.

There also remains a need to provide a water supply system, such as a water plant, of improved safety against pollution, e.g. of improved protection against pollution due to sudden events at the water inflow side.

There also remains a need for a method of protecting a water supply system from pollution e.g. pollution due to sudden events at the inflow side.

The present invention, as a main object, aims at providing a solution to the above-outlined problems.

### SUMMARY OF THE INVENTION

The present invention, in a first embodiment, is a method for monitoring water quality in a water supply system by providing:
a first pipe for conveying water from a source of water;
a particle sensor for sensing particles in the water conveyed in the first pipe, said particle sensor being in operative engagement with said first pipe at a first location on said pipe;
a second pipe, in fluid communication with the first pipe, by means of a first valve; said first valve being disposed at a second location on the first pipe downstream of the first location;
a third pipe, in fluid communication with the first pipe at a location downstream of said first location and upstream of said second location;
a second valve, allowing water conveyed by the first pipe to flow into the third pipe when in an open position;
the method comprising:
   determining a content of particles in the water conveyed by the first pipe, by means of the first particle sensor; and
   triggering a shut off of the first valve and an opening of the second valve when the determined content of particles is higher than a predetermined level, to prevent water flowing in the first pipe from entering the second pipe and to allow water flowing in the first pipe to enter the third pipe.

In one embodiment, there is provided a second particle sensor, in operative engagement with the second pipe, for sensing particles in the water conveyed in said second pipe, said second particle sensor continuously sensing particles in the water of the second pipe; and said second particle sensor triggering a taking of a sample only when a sensed value of the particle content of the water conveyed by the second pipe reaches a predetermined level.

In one embodiment, the method comprises determining further, (i.e. at a later point of time relative to the point of time of the determination of the content of particles that resulted in the closure of the first valve and the opening of the second valve) the content of particles in the water conveyed by the first water pipe, by means of the first particle sensor. Preferably, the content of particles in the water flowing in the first pipe is determined continuously by means of the first particle sensor.

In one embodiment, the method comprises performing at least one further analysis of a characterizing parameter of the water conveyed by the first pipe when the determined content of particles is higher than a predetermined level. Such further analysis preferably is made while the first valve is closed and the second valve is open.

In one embodiment, the method comprises taking at least one sample of water conveyed by the first pipe when the determined content of particles is higher than a predetermined level, and determining a value of at least one characterizing parameter of the water. The sampling and optionally also the sample analysis preferably is made while the first valve is closed and the second valve is open.

In one embodiment, the method comprises triggering the opening of the first valve and shutting off (i.e. closing) of the second valve only when the determined content of particles is lower than a predetermined level.

In one embodiment, the method comprises triggering opening of the first valve and shutting off the second valve only when the determined characterizing parameter of the sample of water from the pipe reaches a predetermined value or is within a predetermined range.

The characterizing parameter may be selected e.g. from pH, transparency, turbidity, conductivity, chlorine, color, bacteria, algae, heavy metals, oxygen, temperature, oxidation/reduction potential (ORP), microorganisms (e.g. with PCR technology), total organic carbon (TOC), total organic nitrogen (TON), content of various macromolecules and macromolecular complexes, e.g. determined by pyrolysis gas chromatography mass spectrometry (PyGC/MS), content of any chemical substance, e.g. determined by UV-VIS.

In one embodiment, the method further comprises triggering an alarm signal when the determined content of particles is higher than a predetermined value.

The present invention furthermore provides an arrangement or system for use in a method according to the invention, said arrangement or system comprising:
a first pipe for conveying water from a source of water;
a first particle sensor for sensing particles in the water conveyed in the first pipe, said first particle sensor being in operative engagement with said first pipe at a first location on said pipe;
a second pipe, in fluid communication with the first pipe, by means of a first valve; said first valve being disposed at a second location on the first pipe downstream of the first location;
a third pipe, in fluid communication with the first pipe at a location downstream of said first location and upstream of said second location;
a second valve, allowing water conveyed by the first pipe to flow into the third pipe when in an open position.

In one embodiment, the arrangement or system comprises a second particle sensor, for sensing particles in the water conveyed in the second pipe, said second particle sensor being in operative engagement with said second pipe.

In one embodiment, the arrangement or system also comprises means for taking samples of the water conveyed by the first and/or the second pipe. The arrangement or system also may comprise means for performing required analyses, e.g. chemical or biological analyses, of the water conveyed by the pipes and/or the water samples.

### BRIEF DESCRIPTION OF THE DRAWINGS

Fig. 1 is a schematic view of part of a water monitoring system used in an embodiment of the present invention;
Fig. 2 is a schematic view of a graph showing the number of particles measured in the water conveyed in the second pipe over a time period;
Fig. 3 is a schematic illustration of the function of part of a water monitoring system used in an embodiment of the present invention;
Fig. 4 is a schematic view of an embodiment of a system for supplying water and monitoring water quality according to the present invention; and
Fig. 5 is another schematic view of an embodiment of a system for supplying water and monitoring water quality according to the present invention; and
Fig. 6 is a schematic illustration of the function of part of a water monitoring system used in the present invention.

### DETAILED DESCRIPTION OF THE INVENTION

In the method and arrangement of the present invention for monitoring water quality in a water supply system, a pipe is provided for conveying water therein from a source of water to a water plant. A particle sensor is in operative engagement with the pipe, at a location downstream of the source of water but upstream of the water plant. The particle sensor senses particles in the water of the pipe and triggers a shut off of a first valve, disposed on the pipe, downstream of the first particle sensor and upstream of the water plant, said shut off being triggered only when a sensed value of the content of particles in the water reaches a predetermined level, thereby preventing the water in the pipe from entering the water plant. The water from the source of water, instead of entering the water plant through the first valve, is diverted into a deviation pipe by means of the opening of a second valve, disposed downstream of the first particle sensor and in fluid communication with the first pipe, at a location upstream of first valve.

The water plant according to the present invention may be any water plant, e.g. a water treatment plant, a drinking water production plant, or any facility where water, in particular of a required quality, is used, produced, supplied or distributed to users, such as a brewery or a facility for producing bottled drinking water or for purifying water, e.g. water to be distributed to consumers.

In a preferred embodiment, the arrangement of the invention comprises a system for monitoring the quality of the water produced, treated or used in the water plant, essentially as described in WO/2007/100390, said system being located within or downstream of the water plant.

By the term "source of water", as used herein, is meant any source from which a flow of water may be obtained, e.g. a lake, a river, a natural source, a reservoir, a water recycling plant, etc. In one embodiment, the source of water is a natural source, such as a lake or a river, or derived from a natural source, such as a reservoir. For example, the water may be raw water, surface water, ground water, artificial infiltration water, lake water, water from a reservoir, water from open air swimming-pools etc

The particles that may be present in the water from the source may be any particles, e.g. organic or inorganic particulate matter, and may be indicative of chemical and radioactive contamination. The particles also may include microorganisms, such as bacteria, algae, and parasites, e.g. Escherichia coli, Cryptosporidium, Giardia, Microcystis etc.

Bacteria are often in the range of 0.5-10 micrometers, Cryptosporidium 2-7 micrometers and Giardia particles are often in the range of 7-20 micrometers.

Thus, in one embodiment, an arrangement according to the present invention comprises a device for monitoring water quality in a water supply system, situated upstream of a water plant, preferably in close vicinity to a source of water. In another embodiment, an arrangement according to the present invention comprises two devices for monitoring water quality in a water supply system, one of which is situated upstream of a water plant, preferably in close vicinity to a source of water, the other one being situated downstream or within the water plant.

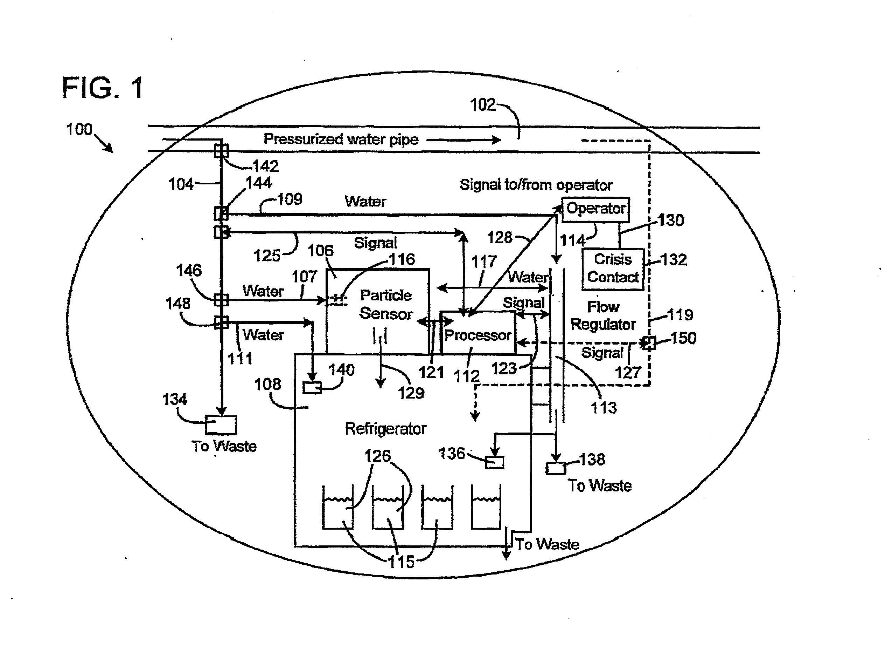

Fig. 1 shows an embodiment of a part 100 of a water monitoring system according to the present invention, said part being situated within or downstream of a water plant. This monitoring system 100 is in operative engagement with a pipe 102 for conveying water (a pressurized water pipe), downstream of e.g. a plant for treating water, or within a water plant using or treating the water conveyed in the pipe 102. The monitoring system 100 comprises a first diverting pipe 104 and a second diverting pipe 119 in fluid communication therewith.

The monitoring system 100 may monitor both treated and untreated water, but preferably is located after at least one water treatment unit. A particle sensor 106 is in operative engagement with the water pipe 102 via a pipe segment 107 to continuously count and determine size of microscopic particles 116 that flow in the water. Thanks to the two diverting pipes 104 and 119 it is possible to take water samples upstream and downstream of the particle sensor 106. In this way, it is possible to smooth out any variations that may occur in the water samples taken.

Undesirable particles in the water may include, for example, microorganisms, bacteria and parasites such as Cryptosporidium and Giardia or other organic contamination. The particles may also be indications of chemical and radioactive contamination.

The diverting pipe 104 also has a first branch pipe 109 and a second branch pipe 111 connected thereto. The branch pipe 109 is in fluid communication with a flow regulator 113 and the branch pipe 111 is in direct communication with a cooled device or a refrigerator 108 that contains a plurality of containers 115 for storing water samples 126. The containers may store any suitable volume of water, e.g. from 0.1 liter to 100 liters, such as 1-2 liters.

In this way, it is possible to analyze water that has not passed through the particle sensor 106. A pipe 117 extends between the particle sensor 106 and the flow regulator 113. One function of the flow regulator is to more accurately set the flow of water by creating a water pillar to ensure that the correct amount of water enters the particle sensor 106 via the pipe 117. The regulator 113 may also be used to remove undesirable air bubbles from the water before the water enters the particle sensor 106. The mechanical low controller can be replaced by an electronic flow controller.

There usually is a strong connection between the amount of microscopic particles and the quality of the water because many of the microscopic particles carry contaminants. The particle sensor 106 may be used to count particles both from water conveyed in the pipe 107 and water that has passed through the water regulator 113 and then through the pipe 117 and/or 119.

As indicated earlier, water may be diverted from the water pipe 102 via a second diverting pipe 119 and directly into the refrigerator 108. In this way, it is possible to analyze downstream water that has not passed through the particle sensor 106 and possibilities will be there to connect via the flow regulator 113. These water samples may then be compared to water samples that come from the particle sensor 106 via the pipe 129. Production of water samples, for storage in the refrigerator, is automatically triggered by a signal from particle sensor 106 when the particle count reaches certain critical values.

The particle sensor 106 may count particles using a light scattering technique, light extinction technique or any other suitable technique for counting particles in flowing water. The device 106 may be set to register particles in the range of 0.1-500 micrometers, more preferably in the range of 0.5-100 micrometers. Preferably, the device 106 may classify the particles in the following size ranges: 0.5-1 micrometers, 1-2 micrometers, 2-7 micrometers, 7-20 micrometers and 20-100 micrometers. Of course, the device may be set to classify other suitable size ranges. Most preferably, the device 106 counts particles in the size range of 1-25 micrometers which includes most if not all bacteria and other microorganisms of particular interest for water quality monitoring.

A microprocessor 112, such as a programmable logic configuration (PLC) device, is in operative engagement with the counting device 106, the flow regulator 113, the diverting pipe 104 and the second diverting pipe 119 via signal connections 121, 123, 125 and 127, respectively, to open and close valves connected to the counting device 106, the flow regulator 113 and the water pipes 104, 119 of the water system 100. The microprocessor 112 is in communication with an operator 114 of the water system 100. The signal 125 may control valves 142, 144, 146, 148. The signal 127 may control the valve 150 of the second diverting pipe 119. The signals 121, 123 control the flow of water in the pipe 117. The microprocessor may store all the particle counts for further analysis.

In operation, the particle sensor 106 continuously counts particles 116 that flow in the water pipes.

When the particle count reaches a critical value over a time period, such as well over 50 particles/ml, an alert or water-testing signal 128 is triggered. In general, the particle count should not exceed 20%, or more preferably 10%, more than the normal base count of particles in the water flow. The particle sensor 106 automatically obtains a water sample 126 for further testing and analysis by the operator 114. The diverting pipe may be connected to a valve to divert water from the main water pipe 102 in order to obtain the water sample 126. The processor may be programmable to arrange for different testing volumes of water. The water samples 126 are preferably automatically kept in the refrigerator 108 to prevent further contamination. As indicated above, the microprocessor 112 activates valves so that a predetermined testing volume of the water sample flows into the containers 115 disposed in the refrigerator 108. The operator 114 may then analyze the water samples 126 in the containers 115. All the events are continuously logged in the processor and/or monitor and/or USB memory and/or flash card.

The alert signal 128 may also be sent to the operator 114 of the water plant. If the particle count reaches a crisis value then a crisis signal 130 may be sent to a crisis contact 132. However, to avoid unnecessary panic, the crisis signal 130 may only be sent after a water test of a sample confirms the very high contamination.

The water may be further analyzed by taking additional water samples such as at locations 134, 136, 138, 140 or any other suitable location. The operator may first do a quick analysis to check the water for cloudiness, color, chlorine, pH, transparency, conductivity, coliform, E. coli or any other suitable parameter. The operator may also check to make sure the rise in particle count is not the result of an internal problem within the water plant itself before an alarm signal is sent out externally.

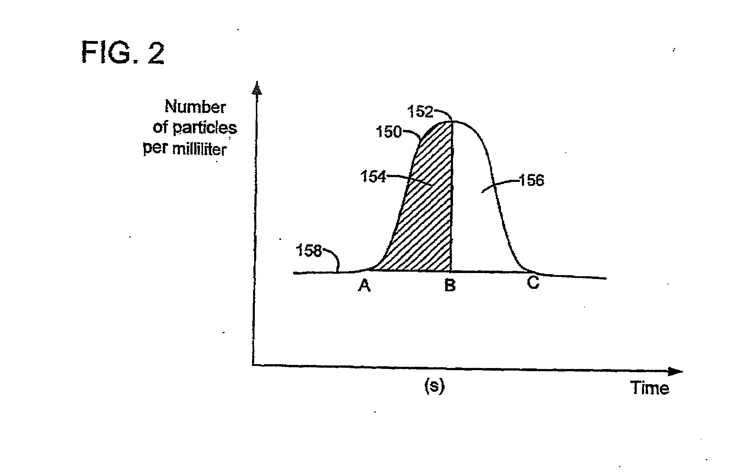

As shown in Fig. 2, the particle count may gradually increase as shown by the graph 150 and reach a peak value 152 relative to a normal base value 158 of the particle count and then decline. The graph 150 may be designed to show all particles sizes and/or only particles predefined particle size ranges such as 0.5-1 micrometers, 1-2 micrometers, 2-7 micrometers and 7-20 micrometers. By classifying the particle count into size ranges the operator may obtain information about which microorganism type might have contaminated the water. Water testing prior to reaching the peak value 152 may be considered as primary testing 154 and testing subsequent to the peak value may be considered secondary testing 156. One object of the primary testing 154 is to trigger the water testing procedure and alerting the necessary personnel. One purpose of the secondary testing 156 is to make sure no additional peak values or substantial increase in the particle count is occurring.

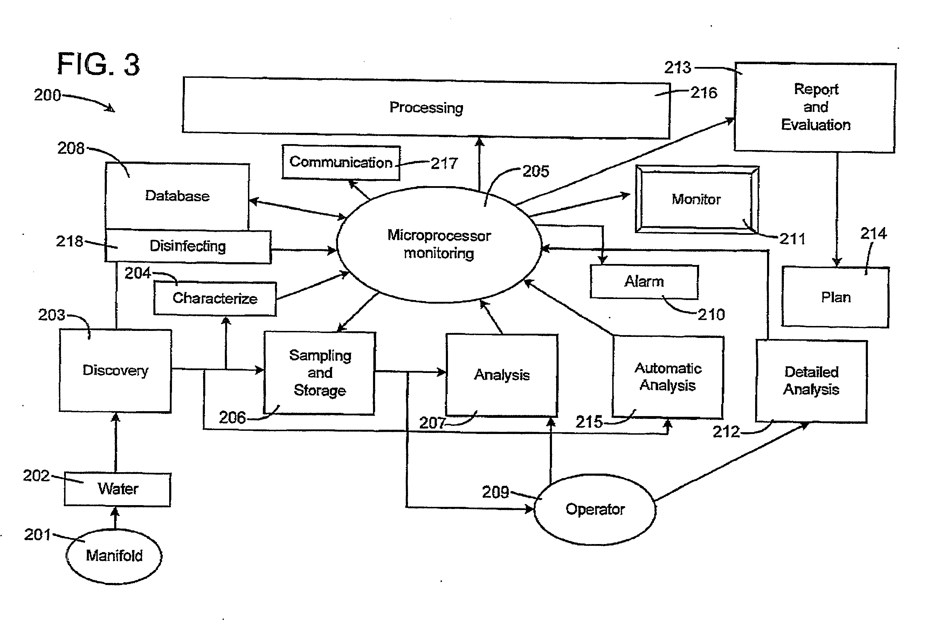

With reference to Fig. 3, a schematic illustration of the functioning of part 100 of the system for monitoring quality of water according to the present invention is shown. Water 202 to be tested is conveyed via the manifold 201 into a discovery device 203 for discovering or sensing contamination of the water with a particle sensor. It is possible to convey water into the system from various points and the system may include reference water i.e. water that is not contaminated. The water is characterized in a characterizing device 204 and information is sent to a microprocessor monitor 205. The current quality status of the water may be shown in a monitor 211. The microprocessor 205 may evaluate and compare the analysis with information stored in an internal or external database 208. If the analysis determines that a sample should be taken, information from the microprocessor 205 is sent to the sampling and storage device 206 for carrying out water sampling. At the same time, the microprocessor 205 sends instructions to the operator 209 that water samples have been taken and the operator 209 sends confirmation to the microprocessor that the message has been received. The operator 209 then carries out a manual quick analysis 207. The quick analysis 207 may include analysis related to pH, transparency, conductivity, chlorine, color, bacteria, heavy metals, oxygen, temperature, ORP, identification of micro-organisms with PCR technology, TOC, TON, PyGC/MS, UV-VIS and other suitable test parameters. The results are sent to the microprocessor 205 for evaluation with the assistance of the database 208. The information is thereafter sent to the operator 209 that decides whether a detailed laboratory analysis 212 should be carried out. The analysis 212 may include analysis of parameters related to bacteria, parasites, organic substances and other suitable parameters. The operator 209 may then inform a risk management group 214 that a sample has been taken and sent away for detailed laboratory analysis 212. The result of the detailed analysis 212 is sent to the microprocessor 205 for evaluation with the assistance of information stored in the database 208. A signal is sent to a report and evaluation unit 213 and the microprocessor 205 provides suggestions to the risk management group 214 regarding steps to be taken. When the contamination is severe, it is possible to quickly trigger an ozone disinfecting unit 218 to treat the contaminated water with an ozone disinfecting treatment. Alarms of an alarm unit 210 for different levels and risks may be sent by the microprocessor 205 to the operator 209 and the risk management 214. It is possible to obtain information from the microprocessor 205 and the database 208 via a communication device 217 that may include GSM, satellite, Internet or any other suitable communication device or technology. It is also possible to periodically activate or on-line activation of a processing unit 216 for cleaning with automatic flushing, disinfecting, calibration control, validation, sensitivity/precision evaluation, maintenance of the sensor 203 and of the sampling and storage unit 206. As an option, it is also possible to include other on-line measuring instruments 215 for an automatic on-site analysis that may be carried out or be located at the customer or in the system 100. The automatic analysis in the instrument 215 may include analysis of parameters such as image-recognition, cell counter with automatic microscopic observation, TOC/COD, DNA identification, Colifast, toxicity, radioactivity and UV-VIS.

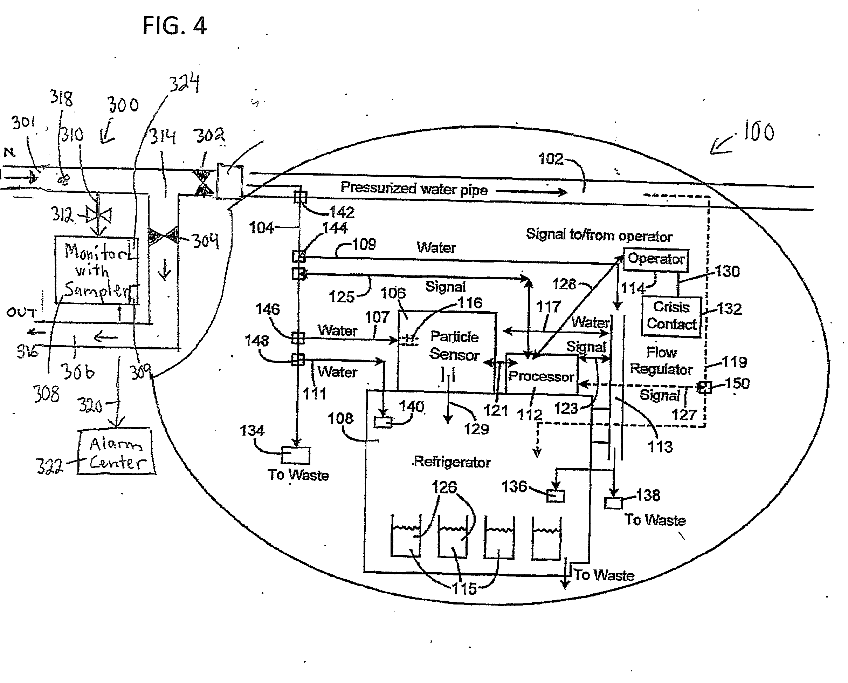

Fig. 4 is a schematic view of an embodiment of the present invention comprising a monitoring system 300 in fluid communication with water pipe 301 at a location upstream of valve 302. The water pipe 301 conveys water to a water plant situated downstream of valve 302. In the illustrated embodiment, the monitoring system 100 is present downstream of the water plant (WP), and monitors the quality of water flowing in pipe 102 conveying water from the water plant. The water plant may be e.g. a water treatment plant. In another embodiment, the monitoring system is located within a water plant, which may be e.g. a brewery, bottled drinking water producer or any other suitable facility where water is used or treated. Preferably, the water monitoring system is located downstream of a water purification unit, e.g. comprising a filter, e.g. a sand filter and a unit for chemical treatment of the water.

The system 300 has a valve 302 in the water pipe 301 and another valve 304 in a water deviation pipe 306. The valves 302 and 304 may be in an open or closed position.

The person of ordinary skill in the art will easily realize that the functions performed by valves 302 and 304 may in fact in some embodiments equally well be performed by one valve only, i.e. a three-way valve. In other embodiments, valve 304 may be located at a distance form valve 302. Thus, in some embodiments, valve 304 is located in close vicinity to the monitoring device 308, which preferably is in close vicinity to the source of water.

Normally, the valve 302 is open and the valve 304 is closed so that no water flows in pipe 306, whereby the water flowing in pipe 301 continues through valve 302, into the water plant and ultimately into pipe 102. The system 300 also has a monitor device 308 in fluid communication with the water pipe 301 via a pipe segment 310 having a valve 312 that also may be in an open or closed position, but that normally is open. Preferably, the monitor device 308 has a particle sensor 309 that continuously senses particles in the water that flows in the water pipe 301. The particle sensor 309 is in operative engagement with the water pipe 301 via pipe segment 310 to preferably continuously count and optionally determine size of microscopic particles 318 that flow in the water. The water flowing in the pipe segment 310 pipe may be regulated by a suitable flow regulator (not shown).

Water samples for further analysis of the water flowing in the water pipe 301 may also be taken. Taking of water samples, which may be stored in a refrigerator, may be set to be automatically triggered by a signal from particle sensor 309 when the particle count reaches certain critical values.

The particle sensor 309 may count particles using a light scattering technique, light extinction technique or any other suitable technique for counting particles in flowing water. The particle sensor 309 may be set to register particles in the range of 0.1-500 micrometers, more preferably in the range of 0.5-100 micrometers. Preferably, the sensor 309 may classify the particles in the following size ranges: 0.5-1 micrometers, 1-2 micrometers, 2-7 micrometers, 7-20 micrometers and 20-100 micrometers. Of course, the sensor may be set to classify other suitable size ranges. Most preferably, the sensor 309 counts particles in the size range of 1-25 micrometers which includes most if not all bacteria and other microorganisms of particular interest for water quality monitoring.

The monitoring device 308 comprises a microprocessor (not shown), such as a programmable logic configuration (PLC) device, that is in operative engagement with the sensor 309, as well as with a flow regulator (not shown) regulating flow into sensor 309. The microprocessor also optionally triggers taking of samples, e.g. in response to a signal from the sensor 309 as well as triggering opening and shutting of valves 304 and 302. The microprocessor also may be in communication with an alarm center. The microprocessor may store all the particle counts for further analysis.

The deviation pipe 306 has an entrance 314 downstream of the location of pipe segment 310 on pipe 301 and upstream of the valve 302, and has an exit 316. When the valve 304 is open and the valve 302 is closed, the water flowing in the water pipe 301 enters the entrance 314, flows through the deviation pipe 306 and exits through the exit 316. This deviating flow may continue until valve 302 is re-opened and valve 304 is closed.

The pipe 306 may return the water to the source of water. Optionally, the water in pipe 306 may be conveyed to a decontamination and/or purification unit, and conveyed back to the source of water or to storage, e.g. in a tank, for future use or further treatment. In one embodiment, water conveyed by the third pipe 306 may be suitably treated, e.g. purified and/or decontaminated, and conveyed back into the pipe 301 at a location preferably upstream of the first location on the pipe 301. Optionally, water conveyed by the third pipe 306 may be discharged, either treated or not.

The monitor device 308 has a particle sensor 309 that is adapted to, preferably continuously, sense the particles in the water of the pipe 301 that enters pipe segment 310 via valve 312. More particularly, the monitor device 308 may monitor micro-pollutant and microscopic particles 318 in the water flowing in pipe 301. The particle sensor 309 may be a particle counter that counts the particles to determine the concentration of the particulate pollution in the water flowing in the water pipe 301. When the concentration of or number of pollutant particles 318 reaches or exceeds a threshold value, e.g. a predetermined value, the monitor device 308 immediately triggers taking of a water sample 324, sends an alarm signal 320 to an alarm center 322 and shuts off the valve 302 to prevent any more water from entering the water plant.

In one embodiment, the triggering may be effected when the particle concentration in the water conveyed by pipe 301 exceeds a predetermined threshold value, by a predetermined percentage. It should be realized that the system 300 primarily aims at monitoring and detecting those very large variation of particle concentration in the water, that may occur in exceptional situations as discussed herein, and that may cause the concentration of particles 318 to rise abruptly, by as much as factor of over 10⁴ or more over the normal concentration interval. Thus, closing of the valve 302 and opening of valve 304 will be triggered when the particle concentration reaches a value outside the normal range of fluctuations. For example, the valves 302 and 304 may be actuated when a particle concentration determined by particle sensor 309 exceeds a predetermined mean particle concentration in the water conveyed by pipe 301 by more than 50%, or more than 100%, or more than 200%, or even more than 500%, such as more than 1000%. For example, the threshold for closing valve 302 and opening valve 304 may be set at a particle concentration exceeding the mean particle concentration by a factor of 10, 100, 1000 or even 10⁴ , depending e.g. on the requirement of the water at the inlet side of the water plant.

In one embodiment, monitor device 308 triggers opening of valve 304 and closing of valve 302 when the particle concentration in the water conveyed by pipe 301 is higher than a predetermined threshold value for more than a predetermined time period. Such time period may be very short, e.g. less than 5 minutes, less than 1 minute, or even less than 30 seconds; or longer, e.g. up to 10 minutes, or even up to 20 minutes. The monitor device 308 also may trigger opening of valve 304 and closing of valve 302 without any delay when the determined particle concentration reaches the predetermined threshold value.

An excess of polluting particles 318 may be the result of sudden heavy rain, storm, unexpected dumping, chemicals, fertilizers, bacteria, parasites, viruses, oil spills, algae blooming, dumping of ballast water and other such unexpected sudden events that dramatically may increase the pollution of the water in the pipe 301. The increase of the concentration of the polluting particles may be expressed as a percentage of a normal predetermined level or by any other suitable way of expressing excessive pollution of the incoming water in the water pipe 301. An important advantage of the system 300 is that the pollution discovery, shut off and water sampling may happen within seconds or minutes of the discovery. In conventional systems, it may take several days to discover and clear up a contaminated water plant.

It should be understood that the threshold value of the concentration of particles 318 that is set to trigger closing of valve 302 and opening of valve 304 will depend of various factors related to the specific situation, and ultimately will depend on the required quality of the water entering the water plant to be used or treated therein.

An advantage of the monitoring system 300 is that within seconds or minutes from the discovery of the concentration of pollutant particles 318 that reaches or exceeds the threshold value, the valves 302 and 304 may be actuated so as to prevent the pollutants 318 from entering the water plant and water pipe 102. The water sample 324 may then be analyzed while the water flow is deviated through deviation pipe 306. In fact, the water may be deviated through pipe 306 for several hours, or as long as necessary, so there is plenty of time to analyze the water sample 324 to make sure the pollutant concentration is back to normal before the valve 302 is opened again to let the water flow into the water plant and water pipe 102. In general, a water plant is adapted to handle small variations in the concentration of pollutants 318 but not sudden and dramatic increases of the pollution such as those that may occur as a result of the events listed above. Thus, the monitoring system 300 prevents the water plant from being contaminated and gives an early warning. The monitoring systems 100 and 300 may communicate with each other.

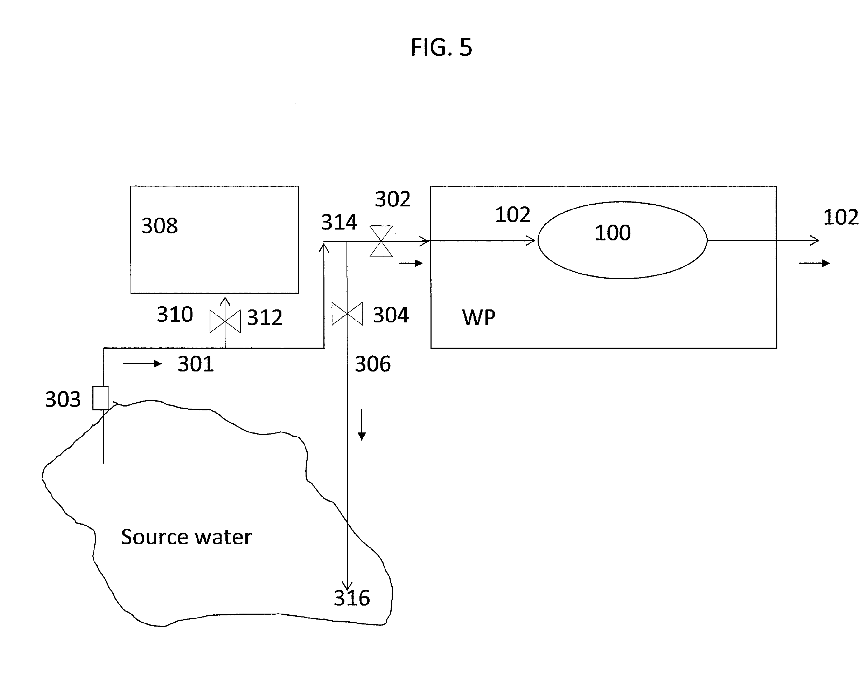

Fig. 5 is another schematic view of an embodiment of the present invention. In Fig. 5, the intake pump 303 feeds a water plant (WP) with water from a water source, e.g. a lake. The water is conveyed by pipe 301, valve 302 and pipe 102. Normally, valve 302 is open and valve 304 is closed. Valve 312 preferably is open all the time and feeds the monitor device 308 with water. When there is contamination reported by the monitor device 308 the valve 302 will automatically be closed and the valve 304 will open so that no water will be supplied to the water plant and so that the water in pipe 301 is made to flow through deviation pipe 306 and exit at 316. The water exiting at 316 may be returned to the original source of water. When the measured values representative of the water in pipe 301, e.g. the particle count, return to normal or to a predetermined level, the valve 304 will close and the valve 302 will re-open.

While the embodiment illustrated in Fig. 5 shows a monitoring device located within a water plant (WP), it should be understood, that the monitoring device also may be situated downstream of the water plant, as long as it is in operative engagement with the water supply system at a point where it is desired to be able to monitor the quality of the water supplied by the system.

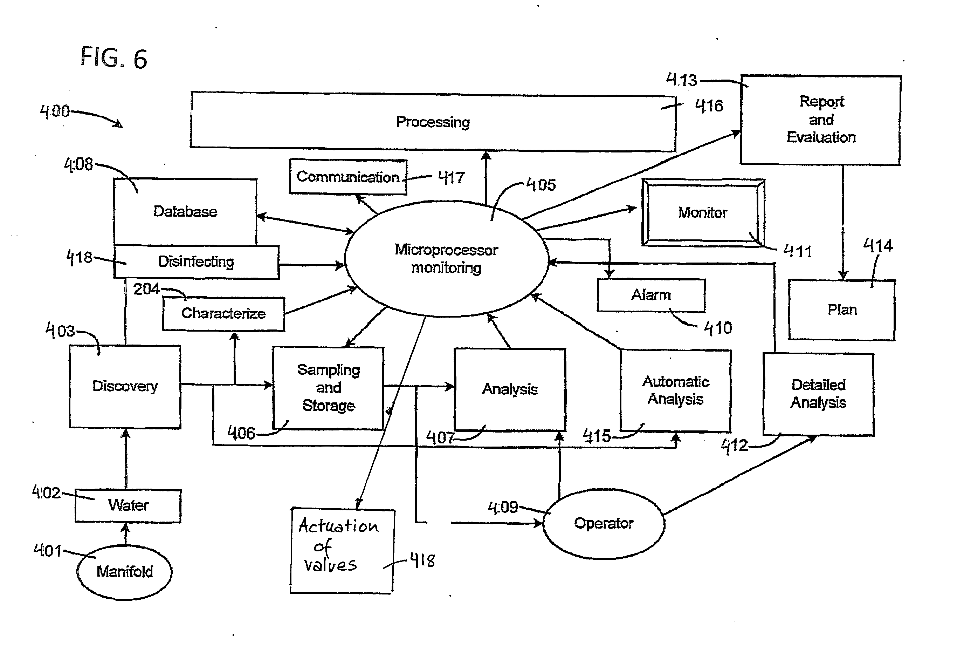

With reference to Fig. 6, a schematic illustration of the functioning of part 300 of the system for monitoring quality of water according to the present invention is shown. Water 402 to be tested is conveyed via the manifold 401 into a discovery device 403 for discovering or sensing contamination of the water with a particle sensor. It is possible to convey water into the system from various points and the system may include reference water i.e. water that is not contaminated. The water is characterized in a characterizing device 404 and information is sent to a microprocessor monitor 405. The current quality status of the water may be shown in a monitor 411. The microprocessor 405 may evaluate and compare the analysis with information stored in an internal or external database 408. If the analysis determines that a predetermined threshold value is reached for the particle content in the water, the microprocessor will trigger actuation 418 of a first and a second valve, i.e. closing of a first valve and opening of a second valve 304, thereby diverting the flow of water from pipe 102 to pipe 306 (Fig. 4). A sample of the water conveyed by pipe 301 (Fig. 4) also may be taken, in which case information from the microprocessor 405 is sent to the sampling and storage device 406 for carrying out water sampling. At the same time, the microprocessor 405 sends instructions to the operator 409 that water samples have been taken and the operator 409 sends confirmation to the microprocessor that the message has been received. The operator 409 then carries out a manual quick analysis 407. The quick analysis 407 may include analyses related to pH, transparency, turbidity, conductivity, chlorine, color, bacteria, algae, heavy metals, oxygen, temperature, ORP, identification of micro-organisms with PCR technology, TOC, TON, PyGC/MS, UV-VIS and other suitable test parameters. The results are sent to the microprocessor 405 for evaluation with the assistance of the database 408. The information is thereafter sent to the operator 409 that decides whether a detailed laboratory analysis 412 should be carried out. The analysis 412 may include analysis of parameters related to bacteria, parasites, organic substances and other suitable parameters. The operator 409 may then inform a risk management group 414 that a sample has been taken and sent away for detailed laboratory analysis 412. The result of the detailed analysis 412 is sent to the microprocessor 405 for evaluation with the assistance of information stored in the database 408. A signal is sent to a report and evaluation unit 413 and the microprocessor 405 provides suggestions to the risk management group 414 regarding steps to be taken. It may be an option to trigger an ozone disinfecting unit 418 to treat the contaminated water with an ozone disinfecting treatment. Alarms of an alarm unit 410 for different levels and risks may be sent by the microprocessor 405 to the operator 409 and the risk management 414. It is possible to obtain information from the microprocessor 405 and the database 408 via a communication device 417 that may include GSM, satellite, Internet or any other suitable communication device or technology. It is also possible to periodically activate or on-line activation of a processing unit 416 for cleaning with automatic flushing, disinfecting, calibration control, validation, sensitivity/precision evaluation, maintenance of the sensor 403 and of the sampling and storage unit 406. As an option, it is also possible to include other on-line measuring instruments 415 for an automatic on-site analysis. The automatic analysis in the instrument 415 may include analysis of parameters such as image-recognition, cell counter with automatic microscopic observation, TOC/COD, DNA identification, Colifast, toxicity, radioactivity and UV-VIS.

As soon as further analysis and characterization of the water establish that the quality of the water conveyed in line 301 is again satisfactory, the microprocessor 405 will send a signal to valve 302 to re-open and valve 304 to close. Such further analysis may comprise establishing that the particle count has reached a value lower than a threshold value, which threshold value may be the same as or different from the threshold value used to trigger closing of valve 302 and opening of valve 304. The signal to open valve 302 and close valve 304 also may be based on any supplementary characterization of the water, e.g. relating to pH, transparency, turbidity, conductivity, chlorine, color, bacteria, algae, parasites, heavy metals, oxygen, temperature, ORP, identification of micro-organisms with PCR technology, TOC, TON, PyGC/MS, UV-VIS and any other suitable test parameter.

From the above description, it will be apparent that the present invention provides an arrangement and method for early warning and protection against pollution in a water supply system. Indeed, the arrangement and method of the invention, will allow rapid detection of sudden pollution events in a flow of water from a source of water to a water plant, allowing the flow of water to be diverted from its normal course so as to protect the water plant from excessively high pollution levels in the inflowing water. By this method, water of a more consistent quality may be produced while preserving units such as filters in the water plant from contamination.

While the present invention has been described in accordance with preferred embodiments, it is to be understood that number of substitutions and alterations may be made thereto without departing from the spirit and scope of the following claims.

## Claims

1. A method for monitoring water quality in a water supply system by providing
a first pipe (301) for conveying water from a source of water;
a first particle sensor (309) for sensing particles in the water conveyed in the first pipe (301), said particle sensor (309) being in operative engagement with the first pipe (301) at a first location on the first pipe (301);
a second pipe (102) in fluid communication with the first pipe (301) by means of a first valve (302); said first valve (302) being disposed at a second location on the first pipe (301) downstream of the first location;
a third pipe (306) in fluid communication with the first pipe (301) at a location downstream of the first location and upstream of the second location;
a second valve (304) allowing water conveyed by the first pipe (301) to flow into the third pipe (306) when in an open position;
the method comprising
determining a content of particles (318) in the water conveyed by the first pipe (301), by means of the first particle sensor (309) ; and
triggering a shut off of the first valve (302) and an opening of the second valve (304) when the determined content of particles (318) is higher than a predetermined level, to prevent water flowing in the first pipe (301) from entering the second pipe (102) and to allow water flowing in the first pipe (301) to enter the third pipe (306).

2. A method according to claim 1, comprising further determining the content of particles (318) in the water conveyed by the first water pipe (301) when the first valve (302) is closed and the second valve (304) is open.

3. A method according to claim 1 or claim 2, comprising performing at least one analysis of a further characterizing parameter of the water conveyed by the first pipe (301) when the determined content of particles (318) is higher than a predetermined level.

4. A method according to any one of the claims 1-3, comprising taking at least one sample of water conveyed by the first pipe (301) when the determined content of particles (318) is higher than a predetermined level, and analysing the sample of water with respect to at least one characterizing parameter of the sample of water.

5. A method according to any one of the claims 2-4, comprising triggering opening of the first valve (302) and shutting off the second valve (304) only when the determined content of particles (318) is lower than a predetermined level.

6. A method according to any one of the claims 3-5, comprising triggering opening of the first valve (302) and shutting off the second valve (304) only when the result of the analysis of at least one characterizing parameter of the water conveyed by the first pipe (301) is within a predetermined range for said parameter.

7. A method according to any one of the claims 4-6, comprising triggering opening of the first valve (302) and shutting off the second valve (304) only when the result of the analysis of at least one characterizing parameter of the sample of water is within a predetermined range for said parameter.

8. A method according to any one of the claims 1-7 wherein water entering the third pipe (306) is returned to the source of water.

9. A method according to any one of the claims 1-8, further comprising triggering an alarm signal when the determined content of particles (318) of the water conveyed by the first pipe (301) is higher than a predetermined value.

10. A method according to any one of the claims 1-9, wherein the content of particles (318) in the water conveyed by the first pipe (301) is continuously determined.

11. A method according to any one of the claims 1-10, wherein a second particle sensor (106) for sensing particles in the water conveyed in the second pipe (102), in operative engagement with the second pipe (102) is provided; the method comprising determining a content of particles in the water of said second pipe (102); and triggering a taking of a sample of the water conveyed by said second pipe (102) when the determined content of particles in the water conveyed by said second pipe (102) is higher than a predetermined level.

12. An arrangement for monitoring water quality in a water supply system comprising
a first pipe (301) for conveying water from a source of water;
a first particle sensor (309) for sensing particles in the water conveyed in the first pipe (301), said particle sensor (309) being in operative engagement with the first pipe (301) at a first location on the first pipe (301);
a second pipe (102) in fluid communication with the first pipe (301) by means of a first valve (302); said first valve (302) being disposed at a second location on the first pipe (301) downstream of the first location;
a third pipe (306) in fluid communication with the first pipe (301) at a location downstream of the first location and upstream of the second location;
a second valve (304) allowing water conveyed by the first pipe (301) to flow into the third pipe (306) when in an open position.

13. An arrangement according to claim 12, comprising a second particle sensor (106) for sensing particles in the water conveyed in the second pipe (102), in operative engagement with the second pipe (102).
